(19) Europäisches Patentamt
European Patent Office
Office européen des brevets

(11) **EP 4 592 906 A1**

(12) **EUROPEAN PATENT APPLICATION**

(43) Date of publication:
**30.07.2025 Bulletin 2025/31**

(21) Application number: **25152788.3**

(22) Date of filing: **20.01.2025**

(51) International Patent Classification (IPC):
**G06N 5/01** *(2023.01)*    **G06N 7/01** *(2023.01)*

(52) Cooperative Patent Classification (CPC):
**G06N 5/01; G06N 7/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.01.2024 JP 2024008804**

(71) Applicant: **Fujitsu Limited
Kawasaki-shi, Kanagawa 211-8588 (JP)**

(72) Inventors:
• **Yin, Fang
Kawasaki-shi, Kanagawa, 211-8588 (JP)**
• **Watanabe, Yasuhiro
Kawasaki-shi, Kanagawa, 211-8588 (JP)**
• **Tamura, Hirotaka
Yokohama-shi, Kanagawa 223-0066 (JP)**

(74) Representative: **Hoffmann Eitle
Patent- und Rechtsanwälte PartmbB
Arabellastraße 30
81925 München (DE)**

(54) **DATA PROCESSING DEVICE, PROCESSING PROGRAM, AND DATA PROCESSING METHOD**

(57)    A data processing device includes a storage unit that stores evaluation function information of an evaluation function of a combinatorial optimization problem represented by a sum of a quadratic cost term and a linear cost term that is a sum of a plurality of constraint terms weighted by a coefficient that represents a weight of each of a plurality of constraint conditions, and a processing unit that acquires the evaluation function information from the storage unit, searches for a solution to the combinatorial optimization problem based on the evaluation function information, increases a value of the coefficient that corresponds to a first constraint condition in a case where there is the first constraint condition in which constraint violation occurs among the plurality of constraint conditions at a first time point during the search for the solution, and determines whether to decrease or maintain the value of the coefficient that corresponds to the plurality of constraint conditions based on a result of comparison between a value of the quadratic cost term at the first time point and a value of the evaluation function obtained before the first time point in a case where the plurality of constraint conditions is satisfied at the first time point.

FIG. 1

EVALUATION FUNCTION:
$$H(x) = E(x) + P(x)$$

QUADRATIC COST TERM:
$$E(x) = -\frac{1}{2}\sum_{i \in D}\sum_{j \in D} W_{ij}x_i x_j - \sum_{i \in D} b_i$$

LINEAR COST TERM
(IN CASE OF INEQUALITY CONSTRAINT)
$$P(x) = \sum_{k \in A} \lambda_k \, max(0, h_k(x))$$

$$h_k(x) = \sum_{i \in D, k \in A} W_{ki}x_i + b_k$$

S1 PERFORM SEARCH PROCESSING (MCMC SEARCH)
S1a PERFORM FLIP DETERMINATION OF STATE VARIABLE
S1b UPDATE $x_i$, $h_i$, AND $E(x)$
S1c PERFORM FLIP DETERMINATION OF AUXILIARY VARIABLE
S1d UPDATE $x_k$, $h_k$, $h_i$, $P(x)$, AND $H(x)$
S2 IS IT ADJUSTMENT TIMING OF $\lambda_k$?
S3 IS THERE CONSTRAINT VIOLATION?
S5 IS E(x) IMPROVED?
S4 INDIVIDUALLY INCREASE $\lambda_k$ OF CONSTRAINT CONDITION IN WHICH VIOLATION OCCURS
S6 DECREASE $\lambda_k$ OF ALL CONSTRAINT CONDITIONS
S7 CORRECT P(x)

10 DATA PROCESSING DEVICE
11 STORAGE UNIT
EVALUATION FUNCTION INFORMATION
12 PROCESSING UNIT

**Description**

FIELD

The embodiments discussed herein are related to a data processing device, a program, and a data processing method.

BACKGROUND

There is a method of converting a combinatorial optimization problem into an Ising model that represents a spin behavior of a magnetic body at a time of searching for a solution to the combinatorial optimization problem. The Ising model is represented by an Ising-type evaluation function that evaluates the solution to the combinatorial optimization problem. The Ising-type evaluation function includes a plurality of state variables (representing a state of the Ising model) and a plurality of weight values. In the Ising-type evaluation function, the state variable is a binary variable that takes a value of 0 or 1 (or -1 or +1). The state variable may be referred to as a bit. Furthermore, a value of the Ising-type evaluation function may also be referred to as energy of the Ising model.

In the solution search, a Markov-Chain Monte Carlo (MCMC) method is used. Hereinafter, the solution search based on the MCMC method will be referred to as an MCMC search. In the MCMC search, for example, a state transition is accepted with an acceptance probability of the state transition specified by a Metropolis method or a Gibbs method. At this time, a state transition that increases energy is also stochastically permitted. Note that the acceptance probability decreases as an amount of increase in the energy increases. Examples of the MCMC method include simulated annealing and a replica exchange method. In such an MCMC search, a state of the Ising model where the value of the Ising-type evaluation function is minimized is searched for. The state where the minimum value of local minimum values of the evaluation function is reached is to be an optimal solution.

Meanwhile, some combinatorial optimization problems have constraint conditions to be satisfied by a solution, and a method of performing a search in consideration of the constraint condition has been proposed. Examples of the constraint condition include an inequality constraint, an equality constraint, an absolute value constraint, and the like. The evaluation function reflecting the constraint condition includes a constraint term having a value corresponding to presence or absence of constraint condition violation. The constraint term is weighted by a coefficient representing weight of the constraint condition.

Citation List

Patent Document

Japanese Laid-open Patent Publication No. 2021-089596
Japanese Laid-open Patent Publication No. 2022-047362
U.S. Patent Application Publication No. 2016/0217380
Japanese Laid-open Patent Publication No. 2023-149726

SUMMARY

TECHNICAL PROBLEM

In a case where a value of the coefficient representing the weight of the constraint condition is not appropriate, search efficiency may deteriorate in the MCMC search. For example, when the value of the coefficient representing the weight of the constraint condition is small, the amount of increase in the energy at a time of transitioning to a state not satisfying the constraint condition (hereinafter referred to as a constraint violation solution) decreases. In this case, the constraint violation solution is likely to occur, and the search efficiency deteriorates. On the other hand, when the value of the coefficient described above is large, the state transition is less likely to occur, and the search efficiency deteriorates.

In one aspect, an object of an embodiment is to provide a data processing device, a program, and a data processing method capable of improving efficiency in searching for a solution to a combinatorial optimization problem.

SOLUTION TO PROBLEM

According to an aspect of the embodiments, a data processing device includes a storage unit that stores evaluation function information of an evaluation function of a combinatorial optimization problem represented by a sum of a quadratic cost term and a linear cost term that is a sum of a plurality of constraint terms weighted by a coefficient that represents a weight of each of a plurality of constraint conditions, and a processing unit that acquires the evaluation function information from the storage unit, searches for a solution to the combinatorial optimization problem based on the evaluation function information, increases a value of the coefficient that corresponds to a first constraint condition in a case where there is the first constraint condition in which constraint violation occurs among the plurality of constraint conditions at a first time point during the search for the solution, and determines whether to decrease or maintain the value of the coefficient that corresponds to the plurality of constraint conditions based on a result of comparison between a value of the quadratic cost term at the first time point and a value of the evaluation function obtained before the first time point in a case where the plurality of constraint conditions is satisfied at the first time point.

ADVANTAGEOUS EFFECTS OF INVENTION

In one aspect, an embodiment may improve efficiency in searching for a solution to a combinatorial optimization problem.

BRIEF DESCRIPTION OF DRAWINGS

FIG. 1 is a diagram illustrating an example of a data processing device and a data processing method of a first embodiment;
FIG. 2 is a block diagram illustrating a hardware example of a data processing device of a second embodiment;
FIG. 3 is a block diagram illustrating a functional example of the data processing device;
FIG. 4 is a diagram illustrating an example of a variable setting unit and a $\lambda_k$ adjustment unit;
FIG. 5 is a flowchart illustrating a flow of an example of the data processing method;
FIG. 6 is a flowchart illustrating a flow of an example of a processing procedure of a Markov-Chain Monte Carlo (MCMC) search; and
FIG. 7 is a diagram illustrating another example of the data processing device.

DESCRIPTION OF EMBODIMENTS

Hereinafter, modes for carrying out an embodiment will be described with reference to the drawings.

(First Embodiment)

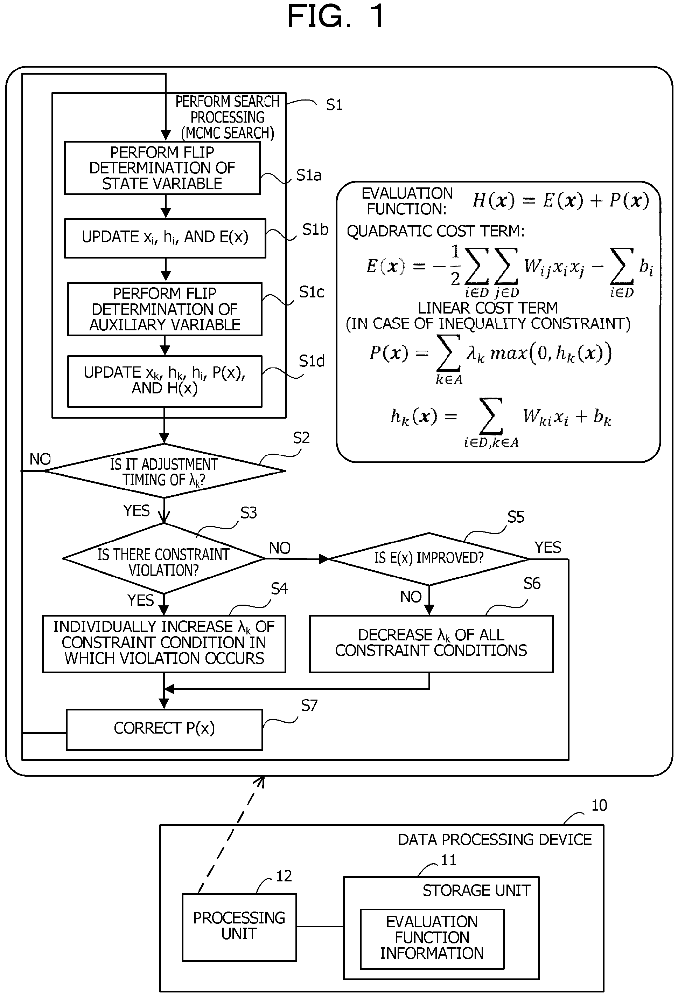

FIG. 1 is a diagram illustrating an example of a data processing device and a data processing method of a first embodiment.
A data processing device 10 of the first embodiment includes a storage unit 11 and a processing unit 12.
The storage unit 11 is a volatile storage device (for example, electronic circuit such as dynamic random access memory (DRAM)), or a non-volatile storage device (for example, electronic circuit such as a flash memory, hard disk drive (HDD), or the like). The storage unit 11 may include an electronic circuit such as a register.
The storage unit 11 stores evaluation function information of an evaluation function of a combinatorial optimization problem including a plurality of constraint conditions.
The evaluation function (H(x)) of the combinatorial optimization problem including the plurality of constraint conditions is represented by the following Expression (1).
[Expression 1]

$$H(x) = E(x) + P(x) \tag{1}$$

H(x) may also be referred to as total energy.
In Expression (1), E(x) is a quadratic cost term, and may be represented by, for example, the following Expression (2).
[Expression 2]

$$E(x) = -\frac{1}{2}\sum_{i \in D}\sum_{j \in D} W_{ij}x_i x_j - \sum_{i \in 1} b_i x_i \qquad (2)$$

A first term on a right side is for integrating products of values (0 or 1) of two state variables and a weight value (representing strength of correlation between the two state variables) for all combinations of all state variables ($x_i$) with neither omission nor duplication. A state variable with an identification number i is represented by $x_i$, a state variable with an identification number j is represented by $x_j$, and a weight value indicating magnitude of correlation between the state variables having i and j as the identification numbers is represented by $W_{ij}$. A second term on the right side is for obtaining a total sum of products of a bias coefficient and a state variable for each identification number. A bias coefficient for the identification number = i is represented by $b_i$.

Note that a set of the identification numbers of the state variables is represented by D. The state variable may also be referred to as a decision variable. Expression (2) may also be referred to as the Ising-type evaluation function described above.

In Expression (1), P(x) is a linear cost term represented by a sum of a plurality of constraint terms, and may be represented by the following Expression (3).

[Expression 3]

$$P(x) = \sum_{k \in A} \lambda_k g(h_k) \qquad (3)$$

An identification number of a constraint condition (or constraint term) is represented by k. Furthermore, $\lambda_k$ is a predetermined positive coefficient representing a weight of the constraint condition with the identification number k. Each constraint term is weighted by $\lambda_k$. Note that A represents a set of the identification numbers of the constraint conditions.

A penalty function, which differs depending on a type of the constraint condition, is represented by $g(h_k)$. It may be said that $\lambda_k g(h_k)$ is one constraint term. A value used to specify a constraint violation amount for the constraint condition with the identification number k is represented by $h_k$.

In a case where the constraint condition is an inequality constraint, $g(h_k)$ may be represented by the following Expression (4).

[Expression 4]

$$g(h_k) = max[0, h_k] \quad h_k = \sum_{i \in D, k \in A} W_{ki}x_i + b_k \qquad (4)$$

In Expression (4), $max[0, h_k]$ is a function that outputs the larger value of 0 and $h_k$. Furthermore, $W_{ki}$ is a coefficient (weight value) representing a weight of $x_i$ in the inequality constraint with the identification number k. A bias coefficient for the inequality constraint with the identification number k is represented by $b_k$.

As in Expressions (1) to (3), H(x) is represented by a sum of the quadratic cost term (E(x)) and the linear cost term (P(x)) that is a sum of the plurality of constraint terms weighted by the coefficient ($\lambda_k$) representing the weight of each of the plurality of constraint conditions.

The evaluation function information stored in the storage unit 11 includes, for example, $W_{ij}$ and $b_i$ in Expression (2), a value of $\lambda_k$ in Expression (3), and $W_{ki}$ and $b_k$ in Expression (4). Note that the storage unit 11 may store a value of the state variable ($x_i$), a value of H(x), a value of E(x), and a value of P(x). Furthermore, the storage unit 11 may store values of M auxiliary variables ($x_k$) representing presence or absence of violation of each of the plurality (hereinafter referred to as M) of constraint conditions. In the following description, description will be made assuming that $x_k$ has a value of 1 in the case of violating the constraint condition with the identification number = k and has a value of 0 in the case of satisfying the constraint condition, but the present disclosure is not limited to this. A spin variable having a value of -1 or +1 may also be used as $x_k$.

Moreover, the storage unit 11 may store $h_i$ representing a change amount of E(x) in a case where each value of the plurality of $x_i$ changes. Note that, hereinafter, $h_i$ may be referred to as a first local field, and the above-described $h_k$ may be referred to as a second local field. When initial values of $h_i$ and $h_k$ are stored, $b_i$ of Expression (2) and $b_k$ of Expression (3) do not have to be stored. Furthermore, the storage unit 11 may store an increase amount $\Delta\lambda_{k+}$ and a decrease amount $\Delta\lambda_{k-}$ when $\lambda_k$ is adjusted. Each of $\Delta\lambda_{k+}$ and $\Delta\lambda_{k-}$ may be set to a different value for each constraint condition.

Furthermore, the storage unit 11 may store various types of data such as calculation conditions when the processing unit 12 executes the data processing method to be described later. Furthermore, in a case where the processing unit 12 executes a part or all of processing of the data processing method to be described later by software, the storage unit 11 stores a program for executing the processing.

The processing unit 12 in FIG. 1 may be implemented by, for example, a processor that is hardware such as a central processing unit (CPU), a graphics processing unit (GPU), or a digital signal processor (DSP). Furthermore, the processing unit 12 may be implemented by using an electronic circuit such as an application specific integrated circuit (ASIC) or a field programmable gate array (FPGA).

The processing unit 12 acquires the evaluation function information from the storage unit 11, and searches for a solution to the combinatorial optimization problem based on the evaluation function information. For example, a state where H(x) indicated in Expression (1) is minimum (a combination of values of state variables) is searched for as the solution. A state where a minimum value of local minimum values of H(x) is reached is to be an optimal solution. Note that the processing unit 12 may also search for a state where the value of H(x) is maximized (in this case, a state where a maximum value is reached is to be the optimal solution) by changing signs of the respective terms on the right side of the Expression (1).

In FIG. 1, a flow of an example of processing by the processing unit 12 is illustrated. Note that, hereinafter, an example using the auxiliary variable ($x_k$) will be indicated, but $h_k$ may also be used instead of $x_k$. Furthermore, here, it is assumed that values based on initial values of N pieces of $x_i$ ($x_i = x_1$ to $x_N$) are stored in the storage unit 11 as initial values of E(x), P(x), $h_i$, $h_k$, and $x_k$.

The processing unit 12 performs the following processing of steps S1 to S4 at a time of solution search based on a Markov-Chain Monte Carlo (MCMC) method. First, the processing unit 12 performs solution search processing based on the MCMC method (MCMC search) (step S1). The search processing includes, for example, processing of flip determination of the state variable (step S1a), update of $x_i$, $h_i$, and E(x) (step S1b), flip determination of the auxiliary variable (step S1c), and update of $x_k$, $h_k$, $h_i$, P(x), and H(x) (step S1d).

The processing of step S1a is performed as follows, for example.

The processing unit 12 determines whether or not to permit a change in a value of one (hereinafter referred to as a flip candidate state variable) of the N pieces of $x_i$ based on $h_i$. The processing unit 12 selects the flip candidate state variable at random or in a predetermined order, for example. The following Expression (5) may represent $h_i$.

[Expression 5]

$$h_i = \sum_{j \in D} W_{ij} x_j + b_i \qquad (5)$$

Note that, in the present embodiment, $h_i$ that reflects not only the change amount of E(x) associated with the change in the value of $x_i$ but also a change amount of P(x) is used. The following Expression (6) may represent $h_i$ that reflects the change amount of P(x).

[Expression 6]

$$h_i = \left( \sum_{j \in D} W_{ij} x_j + b_i \right) - \sum_{k \in A} \lambda_k \Delta g(h_k, W_{ki} \Delta x_i) \qquad (6)$$

In Expression (6), $\Delta g(h_k, W_{ki} \Delta x_i)$ is represented by the following Expression (7), and is an amount that may be calculated from $\Delta x_i$ that is a change amount of the flip candidate state variable and $h_k$ and $W_{ki}$ described above.

[Expression 7]

$$\Delta g(h_k, W_{ki} \Delta x_i) = \Delta x_i [g(h_k + W_{ki} \Delta x_i) - g(h_k)] \qquad (7)$$

Furthermore, $h_i$ represented by the following Expression (8) using $x_k$ representing presence or absence of violation of each of the constraint conditions may also be used as $h_i$.

[Expression 8]

$$h_i = \sum_{j \in D} W_{ij} x_j + b_i - \sum_{k \in A} \lambda_k W_{ki} x_k \qquad (8)$$

The processing unit 12 calculates the change amount ($\Delta E$) of E(x) in a case where a value of the flip candidate state variable changes. For example, $\Delta E_i$ in a case where the value of $x_i$ changes may be calculated by an expression $\Delta E_i =$

$-h_i \Delta x_i$ based on $h_i$ indicated by Expression (6) or (8).

Next, the processing unit 12 determines whether or not to permit a change in the value of the flip candidate state variable (whether or not flip is permissible) based on a result of comparison between $\max(0, \Delta E)$ and a predetermined value. In the MCMC search, examples of the predetermined value include a noise value obtained based on a random number and a value of a temperature parameter. For example, $-\log(\text{rand}) \times T$, which is an example of a noise value obtained based on a uniform random number (rand) greater than 0 and less than 1 and a temperature parameter (T), may be used as the predetermined value. In this case, when $\max(0, \Delta E) < -\log(\text{rand}) \times T$ is satisfied, the processing unit 12 determines that the change in the value of the flip candidate state variable is permitted (flip is permissible).

The processing of step S1b is performed as follows, for example.

In a case where it is determined that the flip is permissible, the processing unit 12 updates N pieces of $h_i$ and E(x), in addition to $x_i$ (state variables for which it is determined that the flip is permissible). Note that the processing unit 12 does not update $x_i$, $h_i$, and E(x) unless it is determined that the flip is permissible. The processing unit 12 updates E(x) by adding $\Delta E$ to the original E(x). Furthermore, for example, in a case where it is determined that flip is permissible for $x_j$, the processing unit 12 updates the N pieces of $h_i$ by adding $\Delta h_i = W_{ij} \Delta x_j$ to the original $h_i$ for each of the N state variables.

The processing of step S1c is performed as follows, for example.

The processing unit 12 determines whether or not to permit a change in a value of one (hereinafter referred to as a flip candidate auxiliary variable) of the M pieces of $x_k$ based on the change amount ($\Delta P$) of P(x) in a case where the value of the flip candidate state variable changes. The processing unit 12 selects the flip candidate auxiliary variable at random or in a predetermined order, for example. The following Expression (9) may represent $\Delta P_i$ in a case where $x_k$ is selected.

[Expression 9]

$$\Delta P_i = \lambda_k [g(h_k + W_{ki}\Delta x_i) - g(h_k)] \qquad (9)$$

Next, the processing unit 12 determines whether or not to permit a change in a value of the flip candidate auxiliary variable (whether or not flip is permissible) based on a result of comparison between $\Delta P$ and a predetermined value. The predetermined value may be a fixed value (for example, 0), or $\log(\text{rand}) \times T$ may be used. For example, in a case where $\Delta P > 0$ or $\Delta P > \log(\text{rand}) \times T$ is satisfied, the processing unit 12 determines that the flip is permissible for the flip candidate auxiliary variable.

In a case where the constraint condition with the identification number = k is not satisfied due to the change in the value of the state variable by the processing of step S1b, $\Delta P$ becomes a positive value. The $\log(\text{rand}) \times T$ is a negative value. Thus, $x_k$ is permitted to change from 0 to 1 by using the determination expression described above.

Note that, in a case where the auxiliary variable is not used, the processing of step S1c may be processing of determining whether or not the state of whether or not the constraint condition with the identification number = k is satisfied is made changeable based on a result of comparison between $\Delta P$ and the predetermined value described above, for example.

The processing of step S1d is performed as follows, for example.

In a case where it is determined that the flip is permissible for the flip candidate $x_k$, the processing unit 12 updates $x_k$, $h_k$, $h_i$, P(x), and H(x). Note that the processing unit 12 does not update $x_k$, $h_k$, $h_i$, P(x), and H(x) unless it is determined that the flip is permissible.

In a case where it is determined that the flip is permissible for $x_j$ as the state variable in the processing of step S1a described above, the processing unit 12 updates $h_k$ by adding $\Delta h_k = W_{kj}\Delta x_j$ to $h_k$. Furthermore, in a case where $h_i$ is represented as Expression (6), the processing unit 12 updates the N pieces of $h_i$ based on $h_k$ before and after updating according to the following Expression (10).

[Expression 10]

$$h_i \leftarrow h_i - \lambda_k \left[ \Delta g(h_k, W_{ki}\Delta x_i) - \Delta g\left(h_k^{(old)}, W_{ki}\Delta x_i\right) \right] \qquad (10)$$

In Expression (10), $h_k^{(old)}$ represents $h_k$ before updating. Note that, in a case where i = j is satisfied, $h_i$ does not change, and thus updating is unnecessary.

In a case where $h_i$ is represent as Expression (8), the processing unit 12 updates $h_i$ by adding $\Delta h_i = -\lambda_k W_{ki}\Delta x_k$ to the original $h_i$ for each of the N state variables.

Moreover, the processing unit 12 updates P(x) by adding $\Delta P$ to the original P(x). Furthermore, the processing unit 12 updates H(x) by adding $\Delta H$ to the original H(x). In a case where the value of $x_i$ changes, $\Delta H_i$ may be represented as $\Delta H_i = \Delta E_i + \Delta P_i$.

Note that the processing unit 12 may repeat the processing of steps S1a and S1b a predetermined number of times, and then perform the processing of steps S1c and S1d. Furthermore, the processing unit 12 does not have to perform the processing of steps S1c and S1d until it is determined that the flip is permissible for the flip candidate state variable in the processing of step S1a and the update is performed in the processing of step S1b.

During the search processing as described above, the processing unit 12 determines whether or not it is an adjustment timing of $\lambda_k$ (step S2). For example, the processing unit 12 determines that it is the adjustment timing each time the search processing described above is performed a predetermined number of times. In a case where it is determined that it is not the adjustment timing, the processing unit 12 repeats the processing from step S1. In a case where it is determined that it is the adjustment timing at a certain time point during the solution search, the processing unit 12 performs the following processing.

The processing unit 12 determines whether or not constraint violation occurs in any one of the M constraint conditions (step S3). For example, in a case where the value of P(x) is 0, the processing unit 12 determines that all the M constraint conditions are satisfied, and in a case where the value of P(x) is greater than 0, the processing unit 12 determines that the constraint violation occurs in any one of the M constraint conditions. The processing unit 12 performs the processing of step S4 in a case where it is determined that there is a constraint condition in which the constraint violation occurs, and performs the processing of step S5 in a case where it is determined that all the M constraint conditions are satisfied.

In the processing of step S4, the processing unit 12 individually increases the value of $\lambda_k$ corresponding to the constraint condition in which the constraint violation occurs among the M constraint conditions. For example, the processing unit 12 increases the value of $\lambda_k$ by adding $\Delta\lambda_{k+}$ to $\lambda_k$. Thereafter, the processing of step S7 is performed.

In the processing of step S5, the processing unit 12 compares E(x) at the adjustment timing of $\lambda_k$ with H(x) obtained before the adjustment timing of this time, and determines whether or not E(x) is improved. For example, in a case where E(x) at the adjustment timing of $\lambda_k$ is smaller than a minimum value (hereinafter referred to as $H_{best}$) among the values of H(x) so far, the processing unit 12 determines that E(x) is improved.

In a case where it is determined that E(x) is improved, the processing unit 12 repeats the processing from step S1 while maintaining the values of $\lambda_k$ corresponding to the M constraint conditions, and in a case where it is determined that E(x) is not improved, the processing unit 12 performs the processing of step S6.

In the processing of step S6, the processing unit 12 decreases the values of $\lambda_k$ corresponding to the M constraint conditions, that is, all the values of $\lambda_k$. For example, the processing unit 12 decreases the values of all the pieces of $\lambda_k$ by subtracting $\Delta\lambda_{k-}$ corresponding to each $\lambda_k$ from each $\lambda_k$.

Note that, for example, a value 0.1 times the original $\lambda_k$ or the like is appropriately set as the value of $\Delta\lambda_{k+}$ or $\Delta\lambda_{k-}$. The values of $\Delta\lambda_{k+}$ and $\Delta\lambda_{k-}$ and the initial value of $\lambda_k$ may be changed during the MCMC search. Furthermore, a method of adjusting the $\lambda_k$ is not limited to the method described above, and the processing unit 12 may multiply $\lambda_k$ by a predetermined value (for example, 1.1 or 0.9) to make adjustment.

After the processing of step S6, the processing of step S7 is performed. In the processing of step S7, the processing unit 12 performs correction of P(x). The correction of P(x) may be performed based on, for example, the following Expression (11) using $\Delta\lambda_k$ that is the change amount of $\lambda_k$.

[Expression 11]

$$P(x) = P(x) + \sum_{k \in A} \Delta\lambda_k \left( \sum_{\substack{i \in D \\ k \in A}} W_{ki} x_i - U_k \right) x_k \qquad (11)$$

For example, $\Delta\lambda_k$ is $\Delta\lambda_{k+}$ or $\Delta\lambda_{k-}$ described above. Furthermore, $U_k$ represents an upper limit of a resource amount, and $U_k = -b_k$ is satisfied.

Note that the correction of P(x) may be performed based on the following Expression (12) without using $x_k$.

[Expression 12]

$$P(x) = P(x) + \sum_{k \in A} \Delta\lambda_k max[0, h_k] \qquad (12)$$

After the processing of step S7, the processing from step S1 is repeated.

Note that, in the above description, an example has been described in which the flip candidate state variables are selected one by one from the N state variables and the processing of steps S1a and S1b is performed, but the present disclosure is not limited to this. The processing of steps S1a and S1b may be performed in parallel for the plurality of (for example, all the N) state variables. In that case, when there is a plurality of state variables whose values are permitted to change, the processing unit 12 selects a state variable whose value is to be changed at random or according to a predetermined rule.

Similarly, in the above description, an example has been described in which the flip candidate auxiliary variables are selected one by one among the M state variables and the processing of steps S1c and S1d is performed, but the present disclosure is not limited to this. The processing of steps S1c and S1d may be performed in parallel for the plurality of (for example, all the M) state variables. In that case, when there is a plurality of auxiliary variables whose values are permitted to change, the processing unit 12 selects an auxiliary variable whose value is to be changed at random or according to a predetermined rule.

In a case where simulated annealing is performed, for example, the processing unit 12 decreases the value of the temperature parameter (T) described above according to a predetermined temperature parameter change schedule each time the flip determination for a state variable is repeated a predetermined number of times. Then, the processing unit 12 outputs a state obtained in a case where the flip determination is repeated the predetermined number of times as a calculation result of the combinatorial optimization problem (for example, displays the state on a display device (not illustrated)). Note that the processing unit 12 may cause the storage unit 11 to hold $H_{best}$ described above and a state when $H_{best}$ is obtained (combination of values of the N state variables). In that case, the processing unit 12 may output, as the calculation result, a state corresponding to $H_{best}$ stored after the flip determination is repeated the predetermined number of times.

In a case where the processing unit 12 performs a replica exchange method, the processing unit 12 repeats the processing of Steps S1 to S7 described above for each of a plurality of replicas to which each different T value is set. Then, the processing unit 12 performs replica exchange each time the flip determination for a state variable is repeated a predetermined number of times. For example, the processing unit 12 selects two replicas having adjacent T values, and exchanges the values of the respective state variables and the values of the respective auxiliary variables between the selected two replicas at a predetermined exchange probability based on an energy difference or a T value difference between the replicas. Note that the T values may be exchanged between the two replicas instead of the values of the respective state variables and the values of the respective auxiliary variables. Alternatively, the processing unit 12 causes the storage unit 11 to hold $H_{best}$ and the state when $H_{best}$ is obtained. Then, the processing unit 12 outputs, as a calculation result, a state corresponding to the smallest $H_{best}$ in all the replicas among the pieces of $H_{best}$ stored after the flip determination described above is repeated the predetermined number of times in the respective replicas.

As described above, the data processing device 10 includes the storage unit 11 and the processing unit 12. The storage unit 11 stores the evaluation function information. The evaluation function information is information regarding the evaluation function (H(x)) of the combinatorial optimization problem represented by the sum of the quadratic cost term (E(x)) and the linear cost term (P(x)) that is the sum of the plurality of constraint terms weighted by the coefficient ($\lambda_k$) representing the weight of each of the plurality of constraint conditions. The processing unit 12 acquires the evaluation function information from the storage unit 11, and searches for a solution to the combinatorial optimization problem based on the evaluation function information. Then, in a case where there is a first constraint condition in which the constraint violation occurs among the plurality of constraint conditions at a first time point (the adjustment timing described above) during the solution search, the processing unit 12 increases the value of $\lambda_k$ corresponding to the first constraint condition. In a case where all of the plurality of constraint conditions are satisfied at the first time point, the processing unit 12 compares the value of E(x) at the first time point with the value of H(x) obtained before the first time point (for example, $H_{best}$). Then, the processing unit 12 determines whether to decrease or maintain the value of $\lambda_k$ corresponding to the plurality of constraint conditions based on a result of the comparison.

By adjusting $\lambda_k$ as described above, $\lambda_k$ may be appropriately adjusted by reflecting a solution search situation (for example, a situation as to whether or not E(x) is improved) and a constraint satisfaction situation, so that efficiency in searching for a solution to the combinatorial optimization problem may be improved.

For example, according to an adjustment method of $\lambda_k$ according to the present embodiment, in a case where there is a constraint condition in which the constraint violation occurs among the plurality of constraint conditions at the adjustment timing, the value of $\lambda_k$ corresponding to the constraint condition is increased. As a result, occurrence of a constraint violation solution for the constraint condition may be suppressed, and the efficiency in searching for the solution is improved. Furthermore, according to the adjustment method of $\lambda_k$ according to the present embodiment, in a case where all of the plurality of constraint conditions are satisfied, whether to maintain or decrease the value of $\lambda_k$ is determined based on the result of comparison between the value of E(x) at the adjustment timing and the value of H(x) obtained before the adjustment timing. For example, when the value of E(x) at the adjustment timing is equal to or greater than $H_{best}$, the value of $\lambda_k$ corresponding to the plurality of constraint conditions is decreased, so that a state transition is promoted, and the search efficiency is improved. When the value of E(x) at the adjustment timing is smaller than $H_{best}$, it is sufficient that the processing unit 12 maintains the current value of $\lambda_k$. This is because there is a high possibility that the current value of $\lambda_k$ is appropriate.

Furthermore, the adjustment method of $\lambda_k$ according to the present embodiment does not uniformly decrease all

the pieces of $\lambda_k$ in a case where all the plurality of constraint conditions are satisfied (in a case where no constraint violation occurs), and thus, it is possible to suppress an operation amount.

Furthermore, the adjustment method of $\lambda_k$ according to the present embodiment does not uniformly decrease all the pieces of $\lambda_k$ when the value of E(x) is equal to or greater than $H_{best}$. The adjustment method of $\lambda_k$ according to the present embodiment determines whether to decrease or maintain all the values of $\lambda_k$ based on the value of E(x) and, for example, the result of comparison of $H_{best}$ in a case where all the constraint conditions are satisfied. As a result, even though constraint violation of a certain constraint condition occurs, $\lambda_k$ for the constraint condition is not decreased. As a result, it is possible to lower the possibility of the occurrence of the constraint violation solution, and to suppress the deterioration of the search efficiency.

Furthermore, in a case where $\lambda_k$ is adjusted, P(x) is corrected based on the change amount of $\lambda_k$, whereby occurrence of a calculation error caused by changing of $\lambda_k$ may be suppressed. Note that, in a case where $\lambda_k$ is adjusted, it is conceivable to correct the N pieces of $h_i$, but the operation amount may be reduced by correcting P(x) as described above instead.

Such a data processing device 10 may be expected to be useful as a technique for suppressing an operation amount and an amount of hardware materials and efficiently obtaining an accurate solution when solving various problems in modern society that may be converted into a combinatorial optimization problem having a constraint condition.

(Second Embodiment)

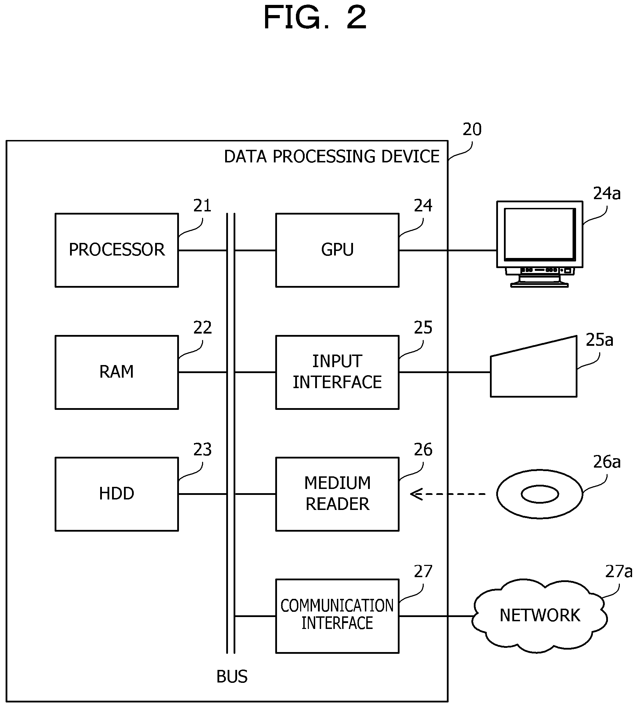

FIG. 2 is a block diagram illustrating a hardware example of a data processing device of a second embodiment.

A data processing device 20 is, for example, a computer and includes a processor 21, a random access memory (RAM) 22, an HDD 23, a GPU 24, an input interface 25, a medium reader 26, and a communication interface 27. The units described above are coupled to a bus.

The processor 21 is a processor such as a GPU or a CPU including an arithmetic circuit that executes a program command. The processor 21 loads at least a part of a program and data stored in the HDD 23 into the RAM 22, and executes the program. Note that the processor 21 may include a plurality of processor cores. Furthermore, the data processing device 20 may include a plurality of processors. Note that a set of the plurality of processors (multiprocessor) may be referred to as a "processor".

The RAM 22 is a volatile semiconductor memory that temporarily stores a program to be executed by the processor 21 and data to be used by the processor 21 for arithmetic operations. Note that the data processing device 20 may include a memory of a type other than the RAM 22, or may include a plurality of memories.

The HDD 23 is a non-volatile storage device that stores programs of software such as an operating system (OS), middleware, and application software, and data. The programs include, for example, a program for causing the data processing device 20 to execute processing of searching for a solution to a combinatorial optimization problem. Note that the data processing device 20 may include another type of storage device such as a flash memory or a solid state drive (SSD), or may include a plurality of non-volatile storage devices.

The GPU 24 outputs an image to a display 24a coupled to the data processing device 20 according to a command from the processor 21. As the display 24a, a cathode ray tube (CRT) display, a liquid crystal display (LCD), a plasma display panel (PDP), an organic electro-luminescence (OEL) display, or the like may be used.

The input interface 25 acquires input signals from an input device 25a coupled to the data processing device 20, and outputs the input signals to the processor 21. As the input device 25a, a pointing device such as a mouse, a touch panel, a touch pad, or a trackball, a keyboard, a remote controller, a button switch, or the like may be used. Furthermore, a plurality of types of input devices may be coupled to the data processing device 20.

The medium reader 26 is a reading device that reads a program and data recorded on a recording medium 26a. As the recording medium 26a, for example, a magnetic disk, an optical disk, a magneto-optical disk (MO), a semiconductor memory, or the like may be used. The magnetic disk includes a flexible disk (FD) and an HDD. The optical disk includes a compact disc (CD) and a digital versatile disc (DVD).

The medium reader 26 copies, for example, a program and data read from the recording medium 26a to another recording medium such as the RAM 22 or the HDD 23. The read program is executed by, for example, the processor 21. Note that the recording medium 26a may be a portable recording medium, and may be used for distribution of the program and data. Furthermore, the recording medium 26a and the HDD 23 may be referred to as computer-readable recording media.

The communication interface 27 is an interface that is coupled to a network 27a and communicates with another information processing device via the network 27a. The communication interface 27 may be a wired communication interface coupled to a communication device such as a switch by a cable, or may be a wireless communication interface coupled to a base station via a wireless link.

Next, functions and processing procedures of the data processing device 20 will be described.

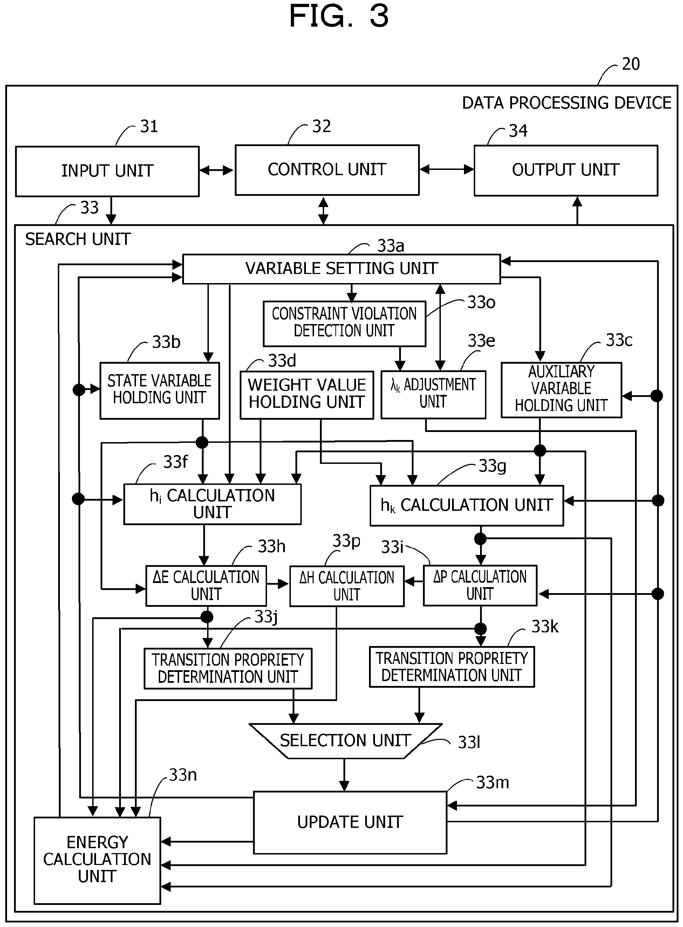

FIG. 3 is a block diagram illustrating a functional example of the data processing device.

The data processing device 20 includes an input unit 31, a control unit 32, a search unit 33, and an output unit 34. With these units, processing similar to the processing performed by the processing unit 12 illustrated in FIG. 1 is performed. Note that various types of information such as the evaluation function information stored in the storage unit 11 illustrated in FIG. 1 are stored in, for example, various holding units or the like to be described later included in the search unit 33. In other words, the search unit 33 may include the function of the storage unit 11 illustrated in FIG. 1. Note that the data processing device 20 may have a functional block corresponding to the storage unit 11 separately from the search unit 33.

The input unit 31, the control unit 32, the search unit 33, and the output unit 34 may be implemented by using, for example, a program module to be executed by the processor 21 or a storage area (register or cache memory) in the processor 21. Note that the search unit 33 may be further implemented by using a storage area secured in the RAM 22 or the HDD 23.

The input unit 31 receives, for example, input of initial values of N state variables, evaluation function information, and calculation conditions. The evaluation function information includes, for example, $W_{ki}$ and $b_k$ in Expression (4) in addition to $W_{ij}$ and $b_i$ in Expression (2). The calculation conditions include, for example, the number of replicas, a replica exchange cycle, and a value of a temperature parameter set for each replica in a case where the replica exchange method is executed, a temperature parameter change schedule in a case where the simulated annealing is performed, calculation end conditions, and the like.

Moreover, the calculation conditions include a parameter for adjusting $\lambda_k$. Examples of the parameter for adjusting $\lambda_k$ include an initial value of $\lambda_k$ ($\lambda_{kinit}$), an increase amount ($\Delta\lambda_{k+}$) and a decrease amount ($\Delta\lambda_{k-}$) of $\lambda_k$, a variable (T1) indicating an interval for setting $\lambda_{kinit}$, $\Delta\lambda_{k+}$, and $\Delta\lambda_{k-}$, and a variable (T0) indicating an adjustment interval of $\lambda_k$. Note that T1 > T0 is satisfied.

Furthermore, the input unit 31 may receive input of an initial value of $h_i$ in Expression (6) or Expression (8) or an initial value of $h_k$ in Expression (3). In a case where M auxiliary variables are used, the input unit 31 may receive input of initial values of the M auxiliary variables.

These pieces of information may be input by an operation of the input device 25a made by a user, or may be input via the recording medium 26a or the network 27a.

The control unit 32 controls each unit of the data processing device 20 to execute processing to be described later.

The search unit 33 repeats an MCMC search under the control of the control unit 32, thereby searching for a state where a value (total energy) of an evaluation function is minimized.

The output unit 34 outputs a search result (calculation result) by the search unit 33.

For example, the output unit 34 may output the calculation result to the display 24a to be displayed, transmit the calculation result to another information processing device via the network 27a, or store the calculation result in an external storage device.

The search unit 33 includes a variable setting unit 33a, a state variable holding unit 33b, an auxiliary variable holding unit 33c, a weight value holding unit 33d, and a $\lambda_k$ adjustment unit 33e. Moreover, the search unit 33 includes an $h_i$ calculation unit 33f, an $h_k$ calculation unit 33g, a $\Delta E$ calculation unit 33h, a $\Delta P$ calculation unit 33i, transition propriety determination units 33j and 33k, a selection unit 33l, an update unit 33m, an energy calculation unit 33n, a constraint violation detection unit 33o, and a $\Delta H$ calculation unit 33p.

The variable setting unit 33a holds various variables ($\lambda_k$, the parameter for adjusting $\lambda_k$ described above, and the like) received by the input unit 31, and sets them in the respective units. The variable setting unit 33a may hold E(x), $H_{best}$, and the like to be used to determine whether to increase or decrease $\lambda_k$. Furthermore, the variable setting unit 33a may hold P(x) used by the constraint violation detection unit 33o to detect occurrence of constraint violation.

The state variable holding unit 33b holds the N state variables ($x_i$). Furthermore, the state variable holding unit 33b outputs a change amount ($\Delta x_i$) of $x_i$ of a flip candidate.

The auxiliary variable holding unit 33c holds the M auxiliary variables. Note that, in a case where the data processing device 20 does not use the auxiliary variable, the auxiliary variable holding unit 33c does not have to be provided.

The weight value holding unit 33d holds weight values ($W_{ij}$) between the N state variable and weight values ($W_{ki}$) representing a weight of $x_i$ in each of the N state variables and M inequality constraints. $W_{ij}$ may be represented by a matrix of N rows and N columns, and $W_{ki}$ may be represented by a matrix of M rows and N columns. Note that it is not needed to hold a weight value between state variables that do not affect any one of the M inequality constraints among the N state variables and the M inequality constraints.

The $\lambda_k$ adjustment unit 33e performs adjustment processing of a value of $\lambda_k$ each time search processing (MCMC search) is performed T0 times. The $\lambda_k$ adjustment unit 33e supplies the adjusted $\lambda_k$ to the variable setting unit 33a, and supplies $\Delta\lambda_k$ to the update unit 33m.

The $h_i$ calculation unit 33f holds N pieces of $h_i$, and updates $h_i$ according to changes in values of the state variables and the auxiliary variables.

The $h_k$ calculation unit 33g holds M pieces of $h_k$ and updates $h_k$ according to changes in the values of the state variables.

The ΔE calculation unit 33h calculates ΔE represented by an expression $\Delta E = -h_i \Delta x_i$.

The ΔP calculation unit 33i calculates ΔP represented by Expression (9) described above.

The transition propriety determination unit 33j performs flip determination processing to determine whether or not to permit a change in a value of a flip candidate state variable based on a result of comparison between ΔE output by the ΔE calculation unit 33h and a predetermined value. Examples of the predetermined value include a noise value obtained based on a random number and a value of a temperature parameter. In a case where $\max(0, \Delta E) < -\log(rand) \times T$ is satisfied, the transition propriety determination unit 33j determines that the change in the value of the flip candidate state variable is permitted (flip is permissible).

The transition propriety determination unit 33k performs flip determination processing to determine whether or not to permit a change in a value of a flip candidate auxiliary variable based on a result of comparison between ΔP output by the ΔP calculation unit 33i and a predetermined value. The predetermined value may be a fixed value (for example, 0), or $\log(rand) \times T$ may be used. For example, in a case where $\Delta P > 0$ or $\Delta P > \log(rand) \times T$ is satisfied, the transition propriety determination unit 33k determines that flip is permissible for the flip candidate auxiliary variable.

The selection unit 33l selects a determination result of the transition propriety determination unit 33j in the case of performing flip determination for a state variable, and selects a determination result of the transition propriety determination unit 33k in the case of performing the flip determination for an auxiliary variable, and outputs the determination result.

The update unit 33m transmits an identification number of the state variable for which it is determined that the flip is permissible to the state variable holding unit 33b, and changes a value of the state variable. Furthermore, the update unit 33m transmits an identification number of the auxiliary variable for which it is determined that the flip is permissible to the auxiliary variable holding unit 33c, and changes a value of the auxiliary variable.

Moreover, in a case where it is determined that the flip is permissible for the flip candidate state variable, the update unit 33m causes the $h_i$ calculation unit 33f and the $h_k$ calculation unit 33g to update the N pieces of $h_i$ and the M pieces of $h_k$. In a case where it is determined that the flip is permissible for the flip candidate auxiliary variable, the update unit 33m causes the $h_i$ calculation unit 33f to update the N pieces of $h_i$.

Furthermore, in a case where it is determined that the flip is permissible for the state variable or the auxiliary variable, the update unit 33m causes the energy calculation unit 33n to update a value of E(x), P(x), or H(x). Furthermore, when $\lambda_k$ is adjusted, the update unit 33m supplies $\Delta\lambda_k$ to the energy calculation unit 33n to correct P(x).

The energy calculation unit 33n holds the values of E(x), P(x), and H(x), and updates these values in a case where an update instruction is issued from the update unit 33m. Moreover, in a case where a P(x) correction instruction is issued from the update unit 33m, the energy calculation unit 33n corrects P(x) based on $\Delta\lambda_k$ according to Expression (11) or Expression (12) described above.

Furthermore, the energy calculation unit 33n holds $H_{best}$, and in a case where the updated H(x) is smaller than $H_{best}$ and no constraint condition violation occurs when the H(x) is obtained, the energy calculation unit 33n sets the H(x) as a new $H_{best}$.

The constraint violation detection unit 33o detects constraint violation based on P(x) held in the variable setting unit 33a. In a case where $P(x) > 0$ is satisfied, the constraint violation detection unit 33o determines that constraint violation occurs in any one of the M constraint conditions, and outputs a signal (Flag) indicating that the constraint violation occurs. Hereinafter, it is assumed that the constraint violation detection unit 33o outputs Flag = 1 in a case where $P(x) > 0$ is satisfied, and outputs Flag = 0 in a case where $P(x) = 0$ is satisfied (that is, in a case where the constraint violation does not occur).

The ΔH calculation unit 33p receives ΔE from the ΔE calculation unit 33h, receives ΔP from the ΔP calculation unit 33i, and calculates and outputs $\Delta H = \Delta E + \Delta P$. The calculated ΔH is supplied to the energy calculation unit 33n for updating H(x).

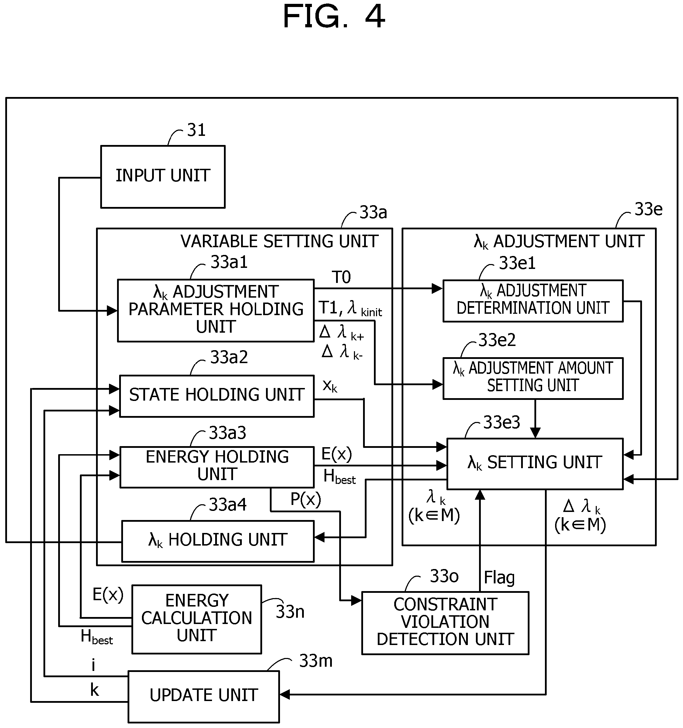

FIG. 4 is a diagram illustrating an example of the variable setting unit and the $\lambda_k$ adjustment unit. In FIG. 4, an example of a case where the auxiliary variable is used is illustrated.

The variable setting unit 33a includes a $\lambda_k$ adjustment parameter holding unit 33a1, a state holding unit 33a2, an energy holding unit 33a3, and a $\lambda_k$ holding unit 33a4. The $\lambda_k$ adjustment parameter holding unit 33a1, the state holding unit 33a2, the energy holding unit 33a3, and the $\lambda_k$ holding unit 33a4 may be implemented by using a storage circuit such as a register.

The $\lambda_k$ adjustment unit 33e includes a $\lambda_k$ adjustment determination unit 33e1, a $\lambda_k$ adjustment amount setting unit 33e2, and a $\lambda_k$ setting unit 33e3.

The $\lambda_k$ adjustment parameter holding unit 33a1 holds T0, T1 (> 0), $\lambda_{kinit}$, $\Delta\lambda_{k+}$, and $\Delta\lambda_{k-}$. The $\lambda_k$ adjustment parameter holding unit 33a1 supplies T0 to the $\lambda_k$ adjustment determination unit 33e1, and supplies T1, $\lambda_{kinit}$, $\Delta\lambda_{k+}$, and $\Delta\lambda_{k-}$ to the $\lambda_k$ adjustment amount setting unit 33e2.

The state holding unit 33a2 holds the values of the state variables and the auxiliary variables. In a case where an identification number i of the state variable for which it is determined that the flip is permissible is received from the update unit 33m, the state holding unit 33a2 changes the value of the state variable ($x_i$) corresponding to the identification number i. In a case where an identification number k of the auxiliary variable for which it is determined that the flip is permissible is received from the update unit 33m, the state holding unit 33a2 changes the value of the auxiliary variable ($x_k$) corresponding to the identification number k. The state holding unit 33a2 supplies M pieces of $\lambda_k$ to the $\lambda_k$ setting unit 33e3.

The energy holding unit 33a3 receives E(x), P(x), and $H_{best}$ from the energy calculation unit 33n, and holds them. The energy holding unit 33a3 supplies E(x) and $H_{best}$ to the $\lambda_k$ setting unit 33e3. The energy holding unit 33a3 supplies P(x) to the constraint violation detection unit 33o.

The $\lambda_k$ holding unit 33a4 holds the initial value of $\lambda_k$ in all the constraint conditions. Thereafter, the $\lambda_k$ holding unit 33a4 holds $\lambda_k$ (k ∈ M) obtained by the $\lambda_k$ setting unit 33e3 at an adjustment timing of $\lambda_k$.

The $\lambda_k$ adjustment determination unit 33e1 determines that it is the adjustment timing of $\lambda_k$ each time the MCMC search is performed T0 times.

The $\lambda_k$ adjustment amount setting unit 33e2 sets $\lambda_{kinit}$, $\Delta\lambda_{k+}$, and $\Delta\lambda_{k-}$ in the $\lambda_k$ setting unit 33e3 each time the MCMC search is performed T1 times. As a result, $\lambda_k$ is initialized.

In a case where Flag = 1 is satisfied for the Flag output by the constraint violation detection unit 33o, the $\lambda_k$ setting unit 33e3 specifies a constraint condition in which $x_k$ = 1 is satisfied (constraint violation occurs) among the M pieces of $x_k$. Then, $\Delta\lambda_{k+}$ is added to the value of $\lambda_k$ (held by the $\lambda_k$ holding unit 33a4) of the specified constraint condition.

In a case where Flag = 0 is satisfied for the Flag output by the constraint violation detection unit 33o, the $\lambda_k$ setting unit 33e3 compares E(x) with $H_{best}$. Then, in a case where E(x) is equal to or greater than $H_{best}$, the $\lambda_k$ setting unit 33e3 decreases all the values of the M pieces of $\lambda_k$ by subtracting $\Delta\lambda_{k-}$ corresponding to each $\lambda_k$ from each $\lambda_k$. In a case where E(x) is smaller than $H_{best}$, the $\lambda_k$ setting unit 33e3 maintains the values of the M pieces of $\lambda_k$.

In a case where the value of $\lambda_k$ is adjusted, the $\lambda_k$ setting unit 33e3 outputs, as $\Delta\lambda_k$, the value used for the adjustment out of $\Delta\lambda_{k-}$ and $\Delta\lambda_{k+}$.

Note that, in the data processing device 20, in a case where the auxiliary variable is not used, the variable setting unit 33a may hold $h_k$ instead of $x_k$. In that case, when $h_k$ > 0 is satisfied, the $\lambda_k$ setting unit 33e3 determines that the constraint violation occurs in the constraint condition with the identification number = k.

Hereinafter, an example of a processing procedure (data processing method) of the data processing device 20 will be described.

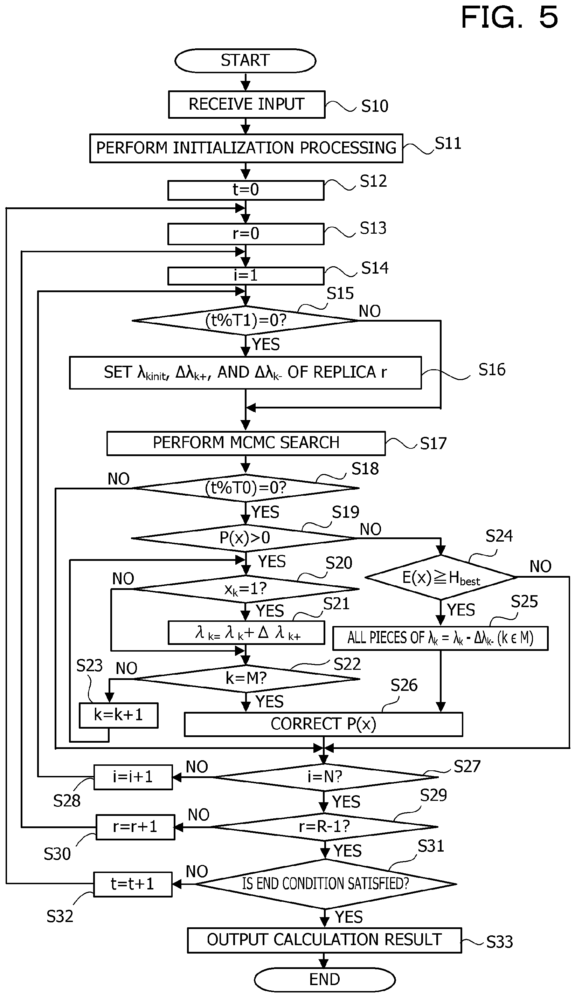

FIG. 5 is a flowchart illustrating a flow of an example of the data processing method. Hereinafter, an example using the auxiliary variable ($x_k$) will be described, but $h_k$ may also be used instead of $x_k$.

Step S10: The input unit 31 receives input of initial values of N state variables, initial values of M auxiliary variables, evaluation function information, and calculation conditions.

Step S11: The control unit 32 performs initialization processing. In the initialization processing, for example, the following processing is performed. The control unit 32 causes the variable setting unit 33a and the state variable holding unit 33b to hold the initial values of the N state variables, and causes the variable setting unit 33a and the auxiliary variable holding unit 33c to hold the initial values of the M auxiliary variables. Furthermore, the control unit 32 causes the weight value holding unit 33d to hold a weight value included in the evaluation function information, and causes the variable setting unit 33a to hold a parameter for adjusting $\lambda_k$ of the calculation conditions.

Moreover, the control unit 32 calculates an initial value of $h_i$ indicated by Expression (6) or Expression (8) and an initial value of $h_k$ indicated by Expression (4) based on the initial values of the N state variables, the initial values of the M auxiliary variables, and the evaluation function information. The control unit 32 causes the $h_i$ calculation unit 33f to hold the calculated initial values of the N pieces of $h_i$, and causes the $h_k$ calculation unit 33g to hold the calculated initial values of the M pieces of $h_k$.

Furthermore, the control unit 32 calculates, for example, an initial value of E(x) indicated by Expression (2), an initial value of P(x) indicated by Expression (3), and an initial value H(x) indicated by Expression (1) based on the initial values of the N state variables, the initial values of the M auxiliary variables, and the evaluation function information. The control unit 32 causes the energy calculation unit 33n and the energy holding unit 33a3 to hold the calculated initial values of E(x) and P(x).

Moreover, in the initialization processing, the number of replicas = R and the like are set in the variable setting unit 33a.

Step S12: The control unit 32 sets t = 0. A variable representing the number of MCMC searches is represented by t. In the following example, it is assumed that the number of MCMC searches is counted as one in a case where the MCMC search is performed for each of the N state variables.

Step S13: The control unit 32 sets r = 0. A variable representing a replica number is represented by r.

Step S14: The control unit 32 sets i = 1. An identification number of the state variable is represented by i.

Step S15: The $\lambda_k$ adjustment amount setting unit 33e2 of the $\lambda_k$ adjustment unit 33e determines whether or not a variable (T1) indicating an interval for setting $\lambda_{kinit}$, $\Delta\lambda_{k+}$, and $\Delta\lambda_{k-}$ is divisible by t (whether or not (t%T1) = 0). In a case where it is determined that (t%T1) = 0 is satisfied, processing of step S16 is performed, and in a case where it is determined that t%T1 = 0 is not satisfied, processing of step S17 is performed.

Step S16: The $\lambda_k$ adjustment amount setting unit 33e2 sets $\lambda_{kinit}$, $\Delta\lambda_{k+}$, and $\Delta\lambda_{k-}$ of a replica with the replica number = r (hereinafter referred to as a replica r) for the $\lambda_k$ setting unit 33e3. As a result, $\lambda_k$ is initialized to $\lambda_{kinit}$. Note that values of $\Delta\lambda_{k+}$ and $\Delta\lambda_{k-}$ may be changed.

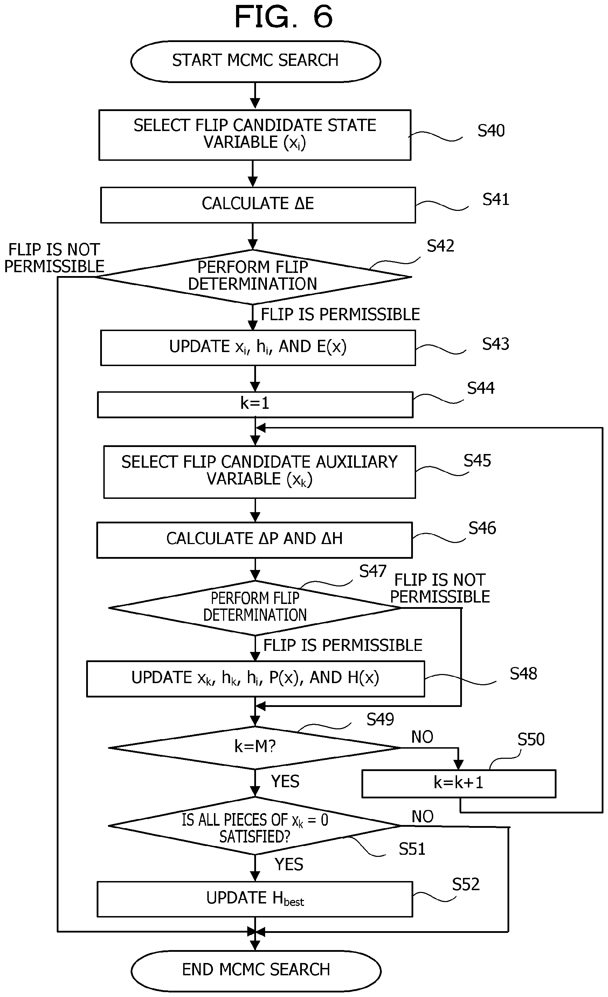

Step S17: The search unit 33 performs the MCMC search. A processing procedure of the MCMC search will be described later (see FIG. 6).

Step S18: The $\lambda_k$ adjustment determination unit 33e1 of the $\lambda_k$ adjustment unit 33e determines whether or not a variable (T0) indicating an adjustment interval of $\lambda_k$ is divisible by t (whether or not (t%T0) = 0). In a case where it is determined that t%T0 = 0 is satisfied, processing of step S19 is performed, and in a case where it is determined that t%T0 = 0 is not satisfied, processing of step S27 is performed.

Step S19: The constraint violation detection unit 33o determines whether or not P(x) > 0 is satisfied. In a case where it is determined that P(x) > 0 is satisfied, processing of step S20 is performed after setting k = 1 although not illustrated, and in a case where it is determined that P(x) > 0 is not satisfied, processing of step S24 is performed.

Step S20: The $\lambda_k$ setting unit 33e3 determines whether or not $x_k$ = 1 is satisfied. In a case where it is determined that $x_k$ = 1 is satisfied, processing of step S21 is performed, and in a case where it is determined that $x_k$ = 1 is not satisfied, processing of step S22 is performed. Note that, in a case where the auxiliary variable is not used, the $\lambda_k$ setting unit 33e3 may determine whether or not $h_k$ > 0 is satisfied instead of determining whether or not $x_k$ = 1 is satisfied. In that case, the processing of step S21 is performed in a case where it is determined that $h_k$ > 0 is satisfied, and the processing of step S22 is performed in a case where it is determined that $h_k$ > 0 is not satisfied.

Step S21: The $\lambda_k$ setting unit 33e3 adjusts $\lambda_k$ by adding $\Delta\lambda_{k+}$ to the original $\lambda_k$.

Step S22: The control unit 32 determines whether or not k = M is satisfied. In a case where it is determined that k = M is satisfied, processing of Step S26 is performed, and in a case where it is determined that k = M is not satisfied, processing of Step S23 is performed.

Step S23: The control unit 32 sets k = k + 1. Thereafter, the processing from step S20 is repeated.

Step S24: The $\lambda_k$ setting unit 33e3 of the $\lambda_k$ adjustment unit 33e determines whether or not E(x) $\geq$ H$_{best}$ is satisfied. In a case where it is determined that E(x) $\geq$ H$_{best}$ is satisfied, processing of step S25 is performed, and in a case where it is determined that E(x) $\geq$ H$_{best}$ is not satisfied, processing of step S27 is performed.

Step S25: The $\lambda_k$ setting unit 33e3 adjusts $\lambda_k$ by subtracting $\Delta\lambda_{k-}$ from all the pieces of $\lambda_k$.

Step S26: Correction of P(x) is performed. The energy calculation unit 33n corrects P(x) according to, for example, Expression (11).

Step S27: The control unit 32 determines whether or not i = N is satisfied. In a case where it is determined that i = N is satisfied, processing of step S29 is performed, and in a case where it is determined that i = N is not satisfied, processing of step S28 is performed.

Step S28: The control unit 32 sets i = i + 1. Thereafter, the processing from step S15 is repeated.

Step S29: The control unit 32 determines whether or not r = R - 1 is satisfied. In a case where it is determined that r = R - 1 is satisfied, processing of step S31 is performed, and in a case where it is determined that r = R - 1 is not satisfied, processing of step S30 is performed.

Step S30: The control unit 32 sets r = r + 1. Thereafter, the processing from step S14 is repeated.

Step S31: The control unit 32 determines whether or not an end condition is satisfied. For example, the control unit 32 determines that the end condition is satisfied in a case where the number of MCMC searches (t) reaches the maximum number of times or in a case where H$_{best}$ becomes equal to or smaller than predetermined magnitude. In a case where it is determined that the processing satisfies the predetermined end condition, processing of Step S33 is performed, and in a case where it is determined that the processing does not satisfy the predetermined end condition, processing of Step S32 is performed.

Step S32: The control unit 32 sets t = t + 1. Thereafter, the processing from step S13 is repeated.

Step S33: The output unit 34 outputs a calculation result. As a result, the processing ends. For example, the output unit 34 may output the calculation result to the display 24a to be displayed, transmit the calculation result to another information processing device via the network 27a, or store the calculation result in an external storage device.

Note that, in a case where the simulated annealing is performed, for example, the control unit 32 decreases the value of the temperature parameter (T) described above according to a predetermined temperature parameter change schedule each time the MCMC search for the state variable is repeated a predetermined number of times. Then, under the control of the control unit 32, the output unit 34 outputs, as a calculation result, a state corresponding to the minimum value of H$_{best}$ of the respective replicas obtained in a case where the MCMC search is repeated the maximum number of times, for example.

In a case where the replica exchange method is performed, replica exchange is performed each time the MCMC search is repeated a predetermined number of times. For example, the control unit 32 selects two replicas having adjacent T values, and exchanges the T values or the values of the respective state variables and the values of the respective auxiliary variables between the selected two replicas at a predetermined exchange probability based on an H(x) difference or a T value difference between the replicas. Then, under the control of the control unit 32, the output unit 34 outputs, as a calculation result, a state corresponding to the minimum value of H$_{best}$ of the respective replicas obtained in a case where the MCMC search is repeated the maximum number of times, for example.

FIG. 6 is a flowchart illustrating a flow of an example of the processing procedure of the MCMC search.

Step S40: A flip candidate state variable ($x_i$) is selected. When the flip candidate state variable is selected, a change amount ($\Delta x_i$) when a value of the state variable is changed is output from the state variable holding unit 33b.

Step S41: The $\Delta E$ calculation unit 33h of the search unit 33 calculates $\Delta E$ by the expression $\Delta E = -h_i \Delta x_i$.

Step S42: The transition propriety determination unit 33j of the search unit 33 performs flip determination for $x_i$ based on a result of comparison between $\Delta E$ and the predetermined value described above. In a case where it is determined that a change in $x_i$ is permitted (in a case where "flip is permissible"), processing of step S43 is performed, and in a case where it is determined that a change in $x_i$ is not permitted (in a case where "flip is not permissible"), one MCMC search is ended.

Step S43: The search unit 33 updates $x_i$, $h_i$, and $E(x)$ by the processing described above.

Step S44: The control unit 32 sets k = 1.

Step S45: A flip candidate auxiliary variable ($x_k$) is selected. When the flip candidate auxiliary variable is selected, a change amount ($\Delta x_k$) when a value of the auxiliary variable is changed is output from the auxiliary variable holding unit 33c. Note that, in a case where the auxiliary variable is not used, the processing of step S45 does not have to be performed.

Step S46: The $\Delta P$ calculation unit 33i of the search unit 33 calculates $\Delta P$ according to Expression (9). Moreover, the $\Delta H$ calculation unit 33p calculates $\Delta H = \Delta E + \Delta P$.

Step S47: The transition propriety determination unit 33k of the search unit 33 performs flip determination for $x_k$ based on a result of comparison between $\Delta P$ and the predetermined value described above, for example. In a case where it is determined that a change in $x_k$ is permitted (in a case where "flip is permissible"), processing of Step S48 is performed, and in a case where it is determined that a change in $x_k$ is not permitted (in a case where "flip is not permissible"), processing of Step S49 is performed. Note that, in a case where the auxiliary variable is not used, the processing of step S47 may be processing of determining whether or not a state of whether or not the constraint condition with the identification number = k is satisfied is made changeable based on the result of comparison between $\Delta P$ and the predetermined value described above, for example.

Step S48: The search unit 33 updates $x_k$, $h_k$, $h_i$, $P(x)$, and $H(x)$ by the processing described above.

Step S49: The control unit 32 determines whether or not k = M is satisfied. In a case where it is determined that k = M is satisfied, processing of Step S51 is performed, and in a case where it is determined that k = M is not satisfied, processing of Step S50 is performed.

Step S50: The control unit 32 sets k = k + 1. Thereafter, the processing from Step S45 is repeated.

Step S51: The control unit 32 determines whether or not all the pieces of $x_k$ are 0. In a case where it is determined that all the pieces of $x_k$ are 0, processing of step S52 is performed. In a case where it is determined that all the pieces of $x_k$ are not 0 (any one $x_k$ is not 0), one MCMC search is ended.

Step S52: The energy calculation unit 33n updates $H_{best}$. In a case where the updated $H(x)$ is smaller than $H_{best}$, the energy calculation unit 33n sets the $H(x)$ as a new $H_{best}$. After the processing of step S52, one MCMC search is ended.

Note that the order of the processing illustrated in FIGs. 5 and 6 is an example, and the order of the processing may be appropriately changed. Furthermore, while it is assumed that the flip candidate state variables and the flip candidate auxiliary variables are selected in the order of identification numbers in the processing example described above, they may be selected at random.

As described above, in a case where there is the constraint condition in which the constraint violation occurs among the M constraint conditions at the adjustment timing of $\lambda_k$ that arrives each time the MCMC search is performed T0 times, the data processing device 20 increases the value of $\lambda_k$ corresponding to the constraint condition. Furthermore, in a case where all the M constraint conditions are satisfied at the adjustment timing of $\lambda_k$, the data processing device 20 compares the value of $E(x)$ at the adjustment timing with $H_{best}$. The data processing device 20 determines whether to decrease or maintain the value of $\lambda_k$ corresponding to the M constraint conditions based on the result of comparison.

By adjusting $\lambda_k$ as described above, $\lambda_k$ may be appropriately adjusted by reflecting a solution search situation and a constraint satisfaction situation, so that efficiency in searching for a solution to a combinatorial optimization problem may be improved similarly to the data processing device 10 of the first embodiment.

Furthermore, the adjustment method of $\lambda_k$ according to the present embodiment does not uniformly decrease all the pieces of $\lambda_k$ in a case where all the plurality of constraint conditions are satisfied (in a case where no constraint violation occurs), and thus, it is possible to suppress an operation amount.

Furthermore, the adjustment method of $\lambda_k$ according to the present embodiment does not uniformly decrease all the pieces of $\lambda_k$ when the value of $E(x)$ is equal to or greater than $H_{best}$. The adjustment method of $\lambda_k$ according to the present embodiment determines whether to decrease or maintain all the values of $\lambda_k$ based on the value of $E(x)$ and, for example, the result of comparison of $H_{best}$ in a case where all the constraint conditions are satisfied. As a result, even though constraint violation of a certain constraint condition occurs, $\lambda_k$ for the constraint condition is not decreased. As a result, it is possible to lower a possibility of occurrence of a constraint violation solution, and to suppress deterioration of the search efficiency.

Furthermore, in a case where $\lambda_k$ is adjusted, P(x) is corrected based on an adjustment amount of $\lambda_k$, whereby occurrence of a calculation error caused by changing of $\lambda_k$ may be suppressed. Note that, in a case where $\lambda_k$ is adjusted, it is conceivable to correct $h_i$, but the operation amount may be reduced by correcting P(x) as in the processing of step S26 instead.

Note that, as described above, the processing contents described above may be implemented by causing the data processing device 20 to execute a program.

The program may be recorded in a computer-readable recording medium (for example, the recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded in a portable recording medium and distributed. In that case, the program may be copied from the portable recording medium to another recording medium (for example, the HDD 23) and executed.

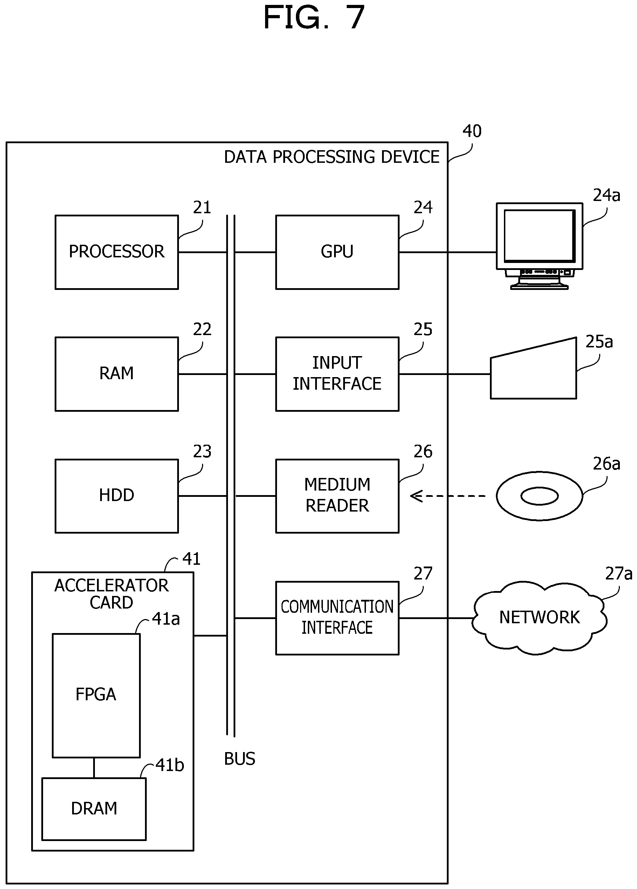

FIG. 7 is a diagram illustrating another example of the data processing device. In FIG. 7, the same elements as those illustrated in FIG. 2 are denoted by the same reference signs.

A data processing device 40 includes an accelerator card 41 coupled to a bus.

The accelerator card 41 is a hardware accelerator that searches for a solution to a combinatorial optimization problem. The accelerator card 41 includes an FPGA 41a and a DRAM 41b.

In the data processing device 40, the FPGA 41a and the DRAM 41b perform, for example, the processing of the processing unit 12 and the storage unit 11 illustrated in FIG. 1 or the processing of the control unit 32 and the search unit 33 illustrated in FIG. 3. In this case, each unit of the processing unit 12 and the storage unit 11 illustrated in FIG. 1 or the control unit 32 and the search unit 33 illustrated in FIG. 3 is implemented by various circuits built in the FPGA 41a, a memory in the FPGA 41a, or the DRAM 41b.

Note that there may be a plurality of the accelerator cards 41.

While one aspect of the data processing devices, the programs, and the data processing methods according to the embodiments has been described above based on the embodiments, this is merely an example and is not limited to the above description.

**Claims**

1. A data processing device comprising:

   a storage unit that stores evaluation function information of an evaluation function of a combinatorial optimization problem represented by a sum of a quadratic cost term and a linear cost term that is a sum of a plurality of constraint terms weighted by a coefficient that represents a weight of each of a plurality of constraint conditions; and
   a processing unit that acquires the evaluation function information from the storage unit, searches for a solution to the combinatorial optimization problem based on the evaluation function information, increases a value of the coefficient that corresponds to a first constraint condition in a case where there is the first constraint condition in which constraint violation occurs among the plurality of constraint conditions at a first time point during the search for the solution, and determines whether to decrease or maintain the value of the coefficient that corresponds to the plurality of constraint conditions based on a result of comparison between a value of the quadratic cost term at the first time point and a value of the evaluation function obtained before the first time point in a case where the plurality of constraint conditions is satisfied at the first time point.

2. The data processing device according to claim 1, wherein
   the processing unit decreases the value of the coefficient that corresponds to the plurality of constraint conditions when the value of the quadratic cost term at the first time point is equal to or greater than a minimum value among the values of the evaluation function obtained before the first time point, and maintains the value of the coefficient that corresponds to the plurality of constraint conditions when the value of the quadratic cost term at the first time point is smaller than the minimum value.

3. The data processing device according to claim 1, wherein the first time point is a time point that arrives each time processing of searching for the solution is performed a predetermined number of times.

4. The data processing device according to claim 1, wherein the processing unit corrects a value of the linear cost term by using a change amount of the value of the coefficient in a case where the value of the coefficient is changed.

5. The data processing device according to claim 1, wherein the processing unit determines that the plurality of constraint conditions is satisfied in a case where a value of the linear cost term is 0, and determines that constraint violation occurs in any one of the plurality of constraint conditions in a case where the value of the linear cost term is greater than 0.

6. A data processing program for causing a computer to execute a process comprising:

acquiring, from a storage unit, evaluation function information of an evaluation function of a combinatorial optimization problem represented by a sum of a quadratic cost term and a linear cost term that is a sum of a plurality of constraint terms weighted by a coefficient that represents a weight of each of a plurality of constraint conditions;
searching for a solution to the combinatorial optimization problem based on the evaluation function information;
increasing a value of the coefficient that corresponds to a first constraint condition in a case where there is the first constraint condition in which constraint violation occurs among the plurality of constraint conditions at a first time point during the search for the solution; and
determining whether to decrease or maintain the value of the coefficient that corresponds to the plurality of constraint conditions based on a result of comparison between a value of the quadratic cost term at the first time point and a value of the evaluation function obtained before the first time point in a case where the plurality of constraint conditions is satisfied at the first time point.

7. A data processing method implemented by a computer, the processing method comprising:

acquiring, from a storage unit, evaluation function information of an evaluation function of a combinatorial optimization problem represented by a sum of a quadratic cost term and a linear cost term that is a sum of a plurality of constraint terms weighted by a coefficient that represents a weight of each of a plurality of constraint conditions;
searching for a solution to the combinatorial optimization problem based on the evaluation function information;
increasing a value of the coefficient that corresponds to a first constraint condition in a case where there is the first constraint condition in which constraint violation occurs among the plurality of constraint conditions at a first time point during the search for the solution; and
determining whether to decrease or maintain the value of the coefficient that corresponds to the plurality of constraint conditions based on a result of comparison between a value of the quadratic cost term at the first time point and a value of the evaluation function obtained before the first time point in a case where the plurality of constraint conditions is satisfied at the first time point.

# FIG. 1

PERFORM SEARCH PROCESSING (MCMC SEARCH) — S1

PERFORM FLIP DETERMINATION OF STATE VARIABLE — S1a

UPDATE $x_i$, $h_i$, AND $E(x)$ — S1b

PERFORM FLIP DETERMINATION OF AUXILIARY VARIABLE — S1c

UPDATE $x_k$, $h_k$, $h_i$, $P(x)$, AND $H(x)$ — S1d

EVALUATION FUNCTION:   $H(x) = E(x) + P(x)$

QUADRATIC COST TERM:

$$E(x) = -\frac{1}{2}\sum_{i \in D}\sum_{j \in D} W_{ij}x_i x_j - \sum_{i \in D} b_i$$

LINEAR COST TERM
(IN CASE OF INEQUALITY CONSTRAINT)

$$P(x) = \sum_{k \in A} \lambda_k \, max\big(0, h_k(x)\big)$$

$$h_k(x) = \sum_{i \in D, k \in A} W_{ki}x_i + b_k$$

S2 — IS IT ADJUSTMENT TIMING OF $\lambda_k$?   NO

YES

S3 — IS THERE CONSTRAINT VIOLATION?   NO → S5 — IS E(x) IMPROVED?   YES

YES

S4 — INDIVIDUALLY INCREASE $\lambda_k$ OF CONSTRAINT CONDITION IN WHICH VIOLATION OCCURS

NO

S6 — DECREASE $\lambda_k$ OF ALL CONSTRAINT CONDITIONS

S7 — CORRECT P(x)

10 — DATA PROCESSING DEVICE

11 — STORAGE UNIT

12 — PROCESSING UNIT

EVALUATION FUNCTION INFORMATION

# FIG. 2

DATA PROCESSING DEVICE 20

PROCESSOR 21

RAM 22

HDD 23

GPU 24

24a

INPUT INTERFACE 25

25a

MEDIUM READER 26

26a

COMMUNICATION INTERFACE 27

NETWORK 27a

BUS

# FIG. 3

DATA PROCESSING DEVICE — 20

INPUT UNIT — 31

CONTROL UNIT — 32

OUTPUT UNIT — 34

SEARCH UNIT — 33

VARIABLE SETTING UNIT — 33a

CONSTRAINT VIOLATION DETECTION UNIT — 33o

STATE VARIABLE HOLDING UNIT — 33b

WEIGHT VALUE HOLDING UNIT — 33d

$\lambda_k$ ADJUSTMENT UNIT — 33e

AUXILIARY VARIABLE HOLDING UNIT — 33c

$h_i$ CALCULATION UNIT — 33f

$h_k$ CALCULATION UNIT — 33g

$\Delta E$ CALCULATION UNIT — 33h

$\Delta H$ CALCULATION UNIT — 33p

$\Delta P$ CALCULATION UNIT — 33i

TRANSITION PROPRIETY DETERMINATION UNIT — 33j

TRANSITION PROPRIETY DETERMINATION UNIT — 33k

SELECTION UNIT — 33l

ENERGY CALCULATION UNIT — 33n

UPDATE UNIT — 33m

# FIG. 4

# FIG. 5

START

RECEIVE INPUT — S10

PERFORM INITIALIZATION PROCESSING — S11

$t=0$ — S12

$r=0$ — S13

$i=1$ — S14

S15
$(t\%T1)=0?$ — NO

YES

SET $\lambda_{kinit}$, $\Delta\lambda_{k+}$, AND $\Delta\lambda_{k-}$ OF REPLICA $r$ — S16

PERFORM MCMC SEARCH — S17

S18
$(t\%T0)=0?$ — NO

YES

S19
$P(x)>0$ — NO

YES

S20
$x_k=1?$ — NO

YES — S21

$\lambda_{k=}\lambda_k+\Delta\lambda_{k+}$

S24
$E(x)\geqq H_{best}$ — NO

YES — S25

ALL PIECES OF $\lambda_k=\lambda_k-\Delta\lambda_{k-}$ $(k\in M)$

S23 NO
$k=M?$ — S22

YES

$k=k+1$

CORRECT $P(x)$ — S26

S27
$i=N?$ — NO

$i=i+1$ — S28

YES — S29

$r=R-1?$ — NO

$r=r+1$ — S30

YES — S31

IS END CONDITION SATISFIED? — NO

$t=t+1$ — S32

YES

OUTPUT CALCULATION RESULT — S33

END

# FIG. 6

START MCMC SEARCH

SELECT FLIP CANDIDATE STATE VARIABLE ($x_i$) — S40

CALCULATE $\Delta E$ — S41

PERFORM FLIP DETERMINATION — S42

FLIP IS NOT PERMISSIBLE

FLIP IS PERMISSIBLE

UPDATE $x_i$, $h_i$, AND E(x) — S43

k=1 — S44

SELECT FLIP CANDIDATE AUXILIARY VARIABLE ($x_k$) — S45

CALCULATE $\Delta P$ AND $\Delta H$ — S46

PERFORM FLIP DETERMINATION — S47

FLIP IS NOT PERMISSIBLE

FLIP IS PERMISSIBLE

UPDATE $x_k$, $h_k$, $h_i$, P(x), AND H(x) — S48

k=M? — S49

NO

k=k+1 — S50

YES

IS ALL PIECES OF $x_k$ = 0 SATISFIED? — S51

NO

YES

UPDATE $H_{best}$ — S52

END MCMC SEARCH

# FIG. 7

DATA PROCESSING DEVICE — 40

PROCESSOR — 21

GPU — 24 — 24a

RAM — 22

INPUT INTERFACE — 25 — 25a

HDD — 23

MEDIUM READER — 26 — 26a

ACCELERATOR CARD — 41

FPGA — 41a

DRAM — 41b

COMMUNICATION INTERFACE — 27 — NETWORK — 27a

BUS

Europäisches
Patentamt

European
Patent Office

Office européen
des brevets

# EUROPEAN SEARCH REPORT

**Application Number**

EP 25 15 2788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/012387 A1 (SUZUKI MASARU [JP] ET AL) 13 January 2022 (2022-01-13)<br>* abstract; figures 2-8 *<br>* paragraph [0025] - paragraph [0068] *<br>- - - - - | 1-7 | INV.<br>G06N5/01<br>G06N7/01 |

| | | | TECHNICAL FIELDS SEARCHED (IPC) |
|---|---|---|---|
| | | | G06N |

The present search report has been drawn up for all claims

| Place of search | Date of completion of the search | Examiner |
|---|---|---|
| The Hague | 4 June 2025 | Rousset, Antoine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 2788

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | | Publication date |
|---|---|---|---|---|
| US 2022012387 A1 | 13-01-2022 | CA | 3135128 A1 | 01-10-2020 |
| | | CN | 113646784 A | 12-11-2021 |
| | | JP | 7562508 B2 | 07-10-2024 |
| | | JP | WO2020196862 A1 | 01-10-2020 |
| | | US | 2022012387 A1 | 13-01-2022 |
| | | WO | 2020196862 A1 | 01-10-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021089596 A
- JP 2022047362 A
- US 20160217380
- JP 2023149726 A